# EUROPEAN PATENT APPLICATION

(11) **EP 1 044 798 A2**
(43) Date of publication of application: **18.10.2000**
(21) Application number: 00107838.5
(22) Date of filing: 12.04.2000
(51) Int. Cl.: B32B 15/01, B32B 3/28, B32B 1/08, B23K 26/00

(54) **Method for manufacturing cellular structures in composite of metallic layers and cellular structures achieved according to this method**

(30) Priority: 14.04.1999 IT TO990296
(71) Applicant: Istituto RTM S.P.A., 10080 Vico Canavese (TO) (IT); DELTA di Amidei Dario & C. Sas, 10010 Burolo (TO) (IT)
(72) Inventor: Amidei, Dario, 10010 Banchette (TO) (IT); Bacci, Maurizio, 10080 Vico Canavese (TO) (IT); Ferlito, Marco, 10010 Salerano Canavese (TO) (IT); Savant Aira, Giuseppe, 10072 Caselle Torinese (TO) (IT)

(57) **Abstract**

A method for manufacturing cellular structures (31) in composite of metallic layers comprising at least two superposed plates (32, 33) and welding zones (36) between the plates disposed according to a predetermined superficial configuration. The method comprises the steps of: a) defining the welding zones (36) according to cells (58) with a given pitch P; b) determining an interstitial space between the plates that includes the welding zones (36); c) entering a fluid in pressure in the said space; and d) enabling at least one of the two plates (32, 33) to deform with respect to the other plate in the cells (58) adjacent to the welding zones (36) up to a pre-arranged thickness of the structure.

## Description

The present invention relates to a method for manufacturing cellular structures in composite of metallic layers and cellular structures achieved according to this method.

More specifically, the invention relates to a method for manufacturing cellular structures in composite of metallic layers and, respectively, to a cellular structure according to the introductory portions of Claim 1 and Claim 13.

A cellular structure of the type above defined and in which the layers include plates embossed with relieved and depressed areas is known from the International Patent Application WO 98/08674. The relieves are specularly superposed one upon the other and the depressions are hold in contact and reciprocally welded. The structure results of high rigidity and it is particularly adapted for being used as semi-finished product. However, the method for manufacturing cellular structures of this type results rather expensive.

There are known methods for manufacturing structural components providing the welding of two plates in zones thereof depending on the desired function of the structure and in which the plates are expanded in the un-welded zones by means of a gas or liquid in pressure. Components of this type are used in aeronautical field. The plates are welded by means of sophisticated "diffusion bonding" techniques and the expansion occurs, at high temperature, by stretching the plates in conditions of super-plasticity. Also this method results expensive.

Methods for expanding thin metallic plates by means of gases or liquids in pressure are also known. The plates are joined each other according to a given design for delimiting ducts and evaporator channels in elements of freezing cells. The products manufactured according to this method do not provide capabilities of resistance to stresses and are not suitable for structural components.

One object of the present invention is to achieve a method for manufacturing plane and/or three-dimensional cellular structures comprising composite of metallic layers simple and of relatively low cost.

Another object is to achieve plane and/or three-dimensional cellular structures of composite of metallic layers of limited cost, in particular for structures requiring no particular aesthetics peculiarities.

These objects are obtained by means of the method for manufacturing cellular structures of the invention according to the characteristic portion of Claim 1, and/or the cellular structure of the characteristic portion of Claim 13.

The method of the invention is particularly useful for achieving panels, structural components and tubings constituted by two or more metallic layers, of limited weight and of high bending and torsional rigidity. The achieved structures provide also good acoustic and/or thermal insulating properties for being advantageously used in many fields requiring such characteristics, in particular in motor vehicle field.

The characteristics of the invention will become clear from the following detailed description given purely by way of non-limitative example, with the aid of the accompanying drawing.
Fig. 1 represents a schematic planar view of a cellular structure according to the invention;
Fig. 2 represents a section according to the line II-II of the structure of Fig. 1;
Fig. 3 represents a partial planar view, in enlarged scale, of the structure of Fig. 1;
Fig. 4 represents a section of the structure of Fig. 3;
Fig. 5 represents the section of the cellular structure of Fig. 4, in a given manufacture step of the method of the invention;
Fig. 6 represents the section of Fig. 5 in another manufacture step of the method of the invention;
Fig. 7 represents a schematic perspective view of the cellular structure of Fig. 1;
Fig. 8 represents a section of another cellular structure according to the invention, in a given step of its manufacture;
Fig. 9 represents the section of Fig. 8 in another steps of its manufacture;
Fig. 10 represents a schematic perspective view of a variant of the cellular structure of the invention;
Fig. 11 represents a schematic planar view of another configuration of the cellular structure of Fig. 1;
Fig. 12 is a schematic planar view of a further configuration of the structure of Fig 1;
Fig. 13 represents a schematic planar view of a variant of cellular structure according to the invention;
Fig. 14 represents a section according to line XIV-XIV of the structure of Fig. 13;
Fig. 15 represents a schematic planar view of another variant of cellular structure according to the invention;
Fig. 16 represents a section according to line XVI-XVI of the structure of Fig. 15.
Fig. 17 represents a transversal section of a further variant of the cellular structure of the invention in an initial step of its manufacture;
Fig. 18 represents a partially sectioned view of the cellular structure of figure 17 in a final step of its manufacture; and
Fig. 19 represents a transversal section of the cellular structure of figure 18.

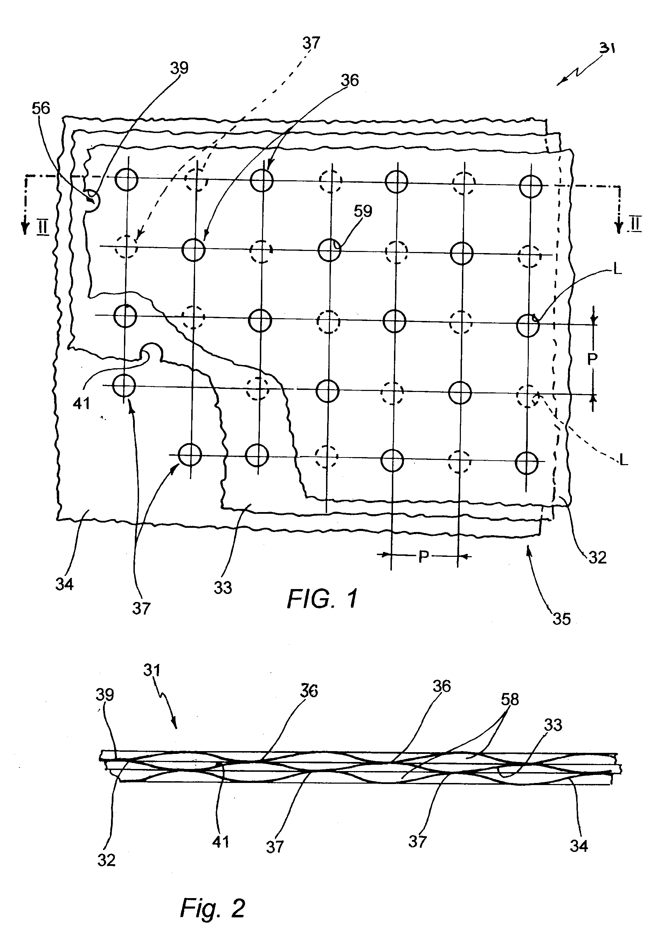

With reference to the figure 1, numeral 31 is indicative of a cellular structure in a composite of metallic layers according to the invention.

The cellular structure 31 comprises three metallic layers constituted by plates 32, 33 and 34 superposed one upon the other and differentiated welding zones 36 and 37 between the plates. These zones are disposed according to a superficial reticular configuration of constant pitch P along directions perpendicular to each other.

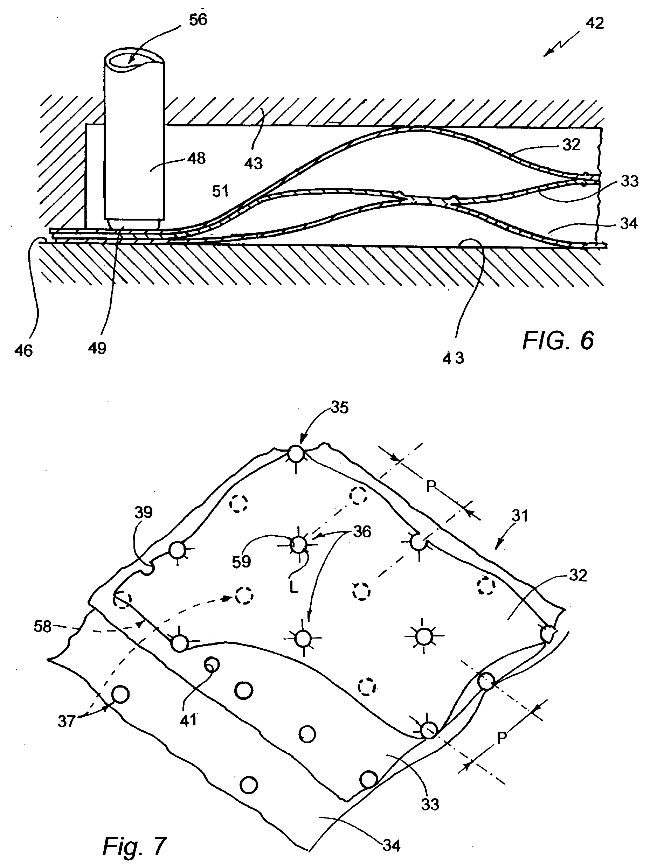

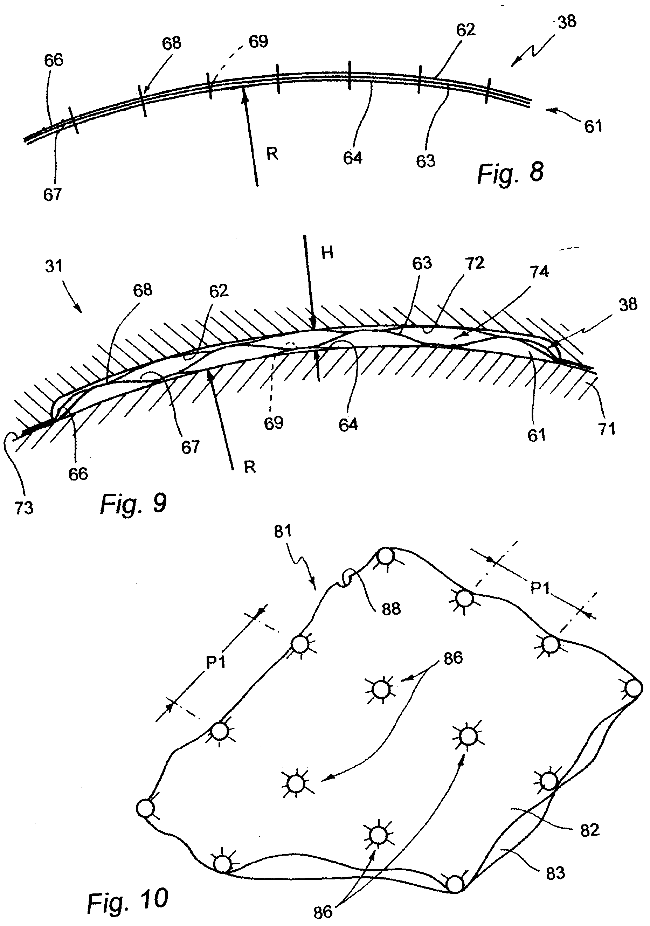

The method of the invention comprises a series of sequential manufacturing steps for achieving a plane sheet 35 (see also Fig. 7) or three-dimensional components 38 (Fig. 8) of cellular structure similar to the sheet 35. Conveniently, the external plate 32 and the internal plate 33 (Figs. 1 and 7) provide a respective admission hole 39, 41.

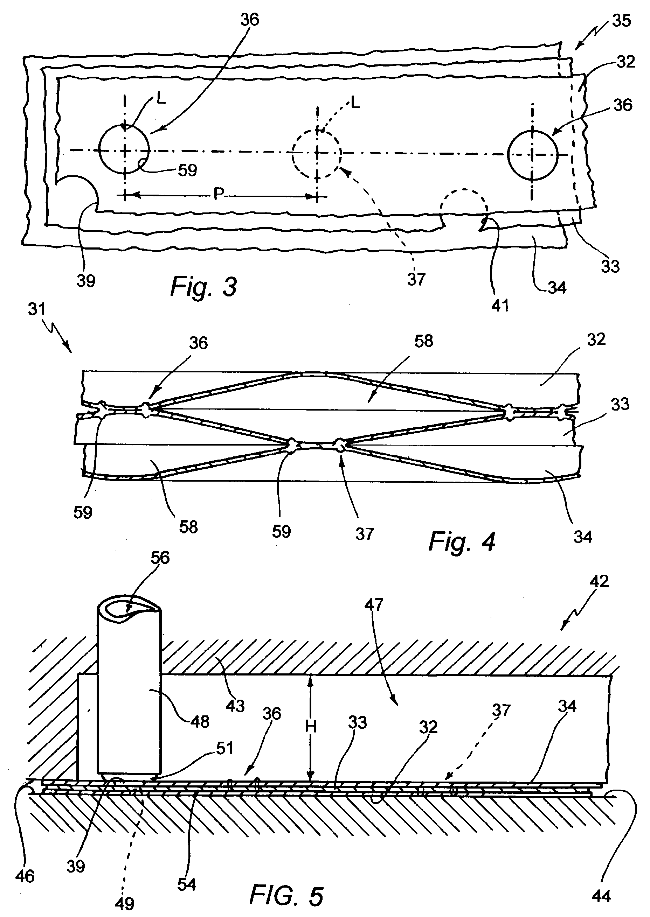

The method of the invention uses an expansion equipment 42 (Fig. 5) including two half shells 43 and 44, an expansion room 47 delimited by the half-shells 43 and 44 and means for admission of a fluid in pressure. The expansion room 47 has a height H which is equal to the thickness of the structure 31 to be achieved and each half-shell 43 and 44 defines a periferic shoulder 46. The means for admission of a fluid include a sleeve 48 on the half-shell 43 associated to the hole 39 and a contrast element 49 on the half shell 44 coaxial with the sleeve 48. The sleeve 48 supports on the end thereof a sealing ring 51 and the contrast element 49 is provided with periferic discontinuities not shown in the figure.

The shoulders 46 of the half-shells 43 and 44 can cooperate with the plates 32 and 34 through a band of suitable width along the entire perimeter thereof. The expansion room 47 is substantially at atmospheric pressure and a suitable pressure can be transmitted from the half-shells to the plates 32, 33 and 34.

The sleeve 48 is connected to a fluid compressor, not shown in the figures. This sleeve is provided to be seal coupled with the plate 32 through the ring 51 and a circular crown of the plate adjacent to the hole 39.

With reference to the Figs. 1, 3 and 5 the method of the invention comprises, in a first step, the overlapping of the three plates 32, 33 and 34 and the welding thereof, two by two, in the zones 36 and 37. The welding provides the forming of cells with a constant superficial pitch P which will be disposed, in a staggered way, between the external plate 32 and the internal plate 33 and between the internal plate 33 and the other external plate 34, respectively.

The second step provides the mounting of the superposed and welded plates 32, 33 and 34 in the expansion equipment 42. The sleeve 48 will be coupled with the admission hole 39 of the plate 32 and, respectively, the shoulder 46 will be coupled with the perimetric band of the plates 32 and 34.

Then a pressure between the half-shells 43 and 44 is exercised such to tightly seal an interstitial space 54 among the plates 32, 33 and 34 from the expansion room 47 and put the space 54 in connection with the sleeve 48. The interstitial space 54 is limited by the plates 32 and 33 and, respectively, the plates 33 and 34 up to the perimetric band and includes the welding zones 36 and 37.

The sealing ring 49 will be pressed against the external surface of the plate 32 around the hole 49, whilst the other surface is contrasted by the plates 33 and 34 and the element 51. It assures a sealing pressure of the sleeve 48 with the plates 32, 33 and 34 during the other manufacturing steps of the structure 31.

For improving the seal of the space 54 between the plates 32, 33 and 34 a seal dough can be interposed along the perimetric band between the plates 32 and 33 and between the plates 33 and 34.

In a third phase, a gaseous or liquid fluid 56 is admitted by the compressor in the interstitial space 54, through the sleeve 48 and the admission holes 39 and 41, at ambient temperature and at an adequate pressure.

In view of the discontinuities of the contrast element 51, the pressure of the fluid 56 causes an initial deflection of the plates 32 and 34. Then, an interstitial gap adjacent to the hole 39 will be formed through which the fluid can start to flow.

Progressively, the action of the fluid 56 stretches the whole area of the external plates 32 and 34 and deforming them as diaphragm deflection surfaces depending on the shape of the welding zones 36 and 37. The internal plate 33 becomes also deformed in dependence on the deflections of the plates 32 and 34.

The pressure of the fluid 56 on the external plates operates substantially on the three plates, determining their stretching. However, during the expansion, the surfaces delimiting the internal plate 33 remain at a same pressure. Therefore, the plates 32 and 33 and, respectively, the plates 33 and 34 will be not subject to substantial tearing actions in the welding zones 36 and 37.

The plates 32, 33, 34 withdraw each other in the expansion room 47 under a sufficient pressure of the fluid 56 and within the limits of plastic deflection of the material. It occurs in the sections of minor resistance adjacent to the welding zones 36 and 37 and up to the distance H in which the external plates 32 and 34 contact the contrast surfaces of the half-shells 43 and 44. In this manner, closed cells 58 with pitch P will be defined.

Finally, the cellular structure 31 is available for the desired use by putting the fluid 56 to the atmospheric pressure, leaving it flowing through the sleeve 48 and opening the half-shells 43 and 44 of the equipment 42.

In the cellular structure 31 (Fig.7), the stretching of the material is proportional to the pitch P and it is limited by the strength of each welding zone 36, 37 and, substantially, by the perimetric length L of this zone. For a given pitch P, the deflection of the material and the height of the cell 58 increase with the decreasing of the length L, finding its limit in the breaking of the zones 36, 37 or of other zones of the plates.

According to the invention, each welding zone 36 and 37 is defined by a welding seam 59 with closed pattern, for instance of circular shape.

For a typical use, the plates 32, 33, 34 are of PO4 pressing steel of 0,3 mm of thickness, the pitch P is of 40 mm and the welding seams 59 of the zones 36, 37 have a diameter of 8 mm. The fluid 56 can be constituted by nitrogen at a pressure of 20 bar, with a thickness H of the structure equal to 10 mm and a P/L ratio equal to around 1,6.

In the motor-vehicle field, the plates 32, 33, 34 have a thickness of 0,2-0,6 mm and the P/L ratio is advantageously selectionable within 0,6 and 3,2, for a pressure of 10-50 bar.

With a sizing of the type above defined, an optimal ratio between the weight and the bending and torsional rigidity of the structure 31 can be obtained. In particular, the plates 32, 33, 34 may be subjected to the maximum deflection without early breaks of the plates or the welding zones 36 or 37.

Obviously, the amount of deflection of a plate in the structure 31 depends on its thickness. Therefore, the deflection of the three plates can be changed, by differentiating the thickness of the three layers.

If requested, the fluid in pressure 56 can include filling material or foam and polymerizable material in the cells 58, for obtaining an anti-rhomb cellular structure or a structure of thermal and/ or acoustic insulation features.

The planar scheme of the welding with pitch P and length L is coherent with the cellular structure to be obtained in the plane sheet 35 or in the three-dimensional component 38. To this end, some portions of the structure 31 can provide welding zones of smaller pitch, for cells 58 of smaller dimensions, or, alternatively, welding zones of larger pitch for cells 58 of larger dimensions according to dispositions not shown in the figures.

In the Figs. 1, 3 and 7, the un-interrupted circles represent the welding seams of the zones 36 between the external plate 32 and the internal plate 33 and the dashed circles represent the seams of the welding zones 37 between the internal plate 33 and the external plate 34.

Conveniently, the staggered weldings 36 and 37 between the plates are obtained by means of laser beams focused on the surfaces of contact between the plates 32 and 33 and, on the surfaces of contact between the plates 34 and 33, "by transparency" through the plate 32, respectively. The plates can be also welded by means of electron beam, in ways well known by the technique. Other kinds of welding can be used as, for example, by means of diversified brazing.

For the three-dimensional component 38 of the figures 8 and 9, the method of manufacturing of the invention provides, as a first step, the forming of a cellular composite 61 by overlapping and welding three plane plates 62, 63 and 64, and in which the external plate 62 and the internal plate 63 provide admission holes 66 and 67. As for the plates 32, 33 and 34, the welding of the plates 62, 63 and 64 is effected two by two on staggered welding zones 68 and 69.

The welding of the composite 61 is followed by a preliminary shaping in a three-dimensional shape of radius R by means of a die, not shown in the figures and in accordance with well-known technologies. In fact, the three plates 62, 63 and 64 constituting the composite behaves in the pressing substantially as a compact plate.

In the second step of its manufacturing, the composite 61 is inserted into an expansion equipment 71 (Fig. 9). This equipment is similar to the expansion equipment 42 and includes fluid admission means not shown in the figures and half-shelves 72 and 73 with coherent radius R that define a shaped expansion room 74 of height H.

As described about the plane sheet 35, also the three-dimensional component 38 will be locked in the equipment 71 along a perimetric band by a sufficient pressure to contrast the stresses of the expansion.

The method of the invention comprises, as third step, the expansion of the composite 61 by means of a gases or a liquid inserted under pressure between the plates 62, 63 and the plates 63 and 64 across the holes 66 and 67. In addition, for this component the expansion occurs with plastic deformation of the metal, up to the height H of the expansion room 74 as represented in figure 9.

To improve the quality of the weldings, the plates 32, 33 and 34 can be slightly embossed in the zones 36 and 37. It assures uniform contacts in the zones to be welded and avoids the risks of undue weldings between the plates 33 and 34 in the zones 36 and, respectively, between the plates 32 and 33 in the zones 37.

The method for manufacturing structural components with cellular structure according to the invention has been described with reference to a composite having three superposed plates. However, it does not represent any limitation to the ambit the invention for composites providing only two plates or four plates or whatsoever number of superposed plates or layers of different shape.

An example of a cellular structure 81 formed by two superposed metallic plates 82 and 83 and welding zones 86 between the plates is represented in figure 10. This structure is disposed according to a superficial reticular configuration of constant pitch P1 along directions perpendicular to each other.

Also the structures 81 can be manufactured according to the method described for the structures 31, considering that, in this case, only one of the two plates 82 and 83 includes an admission hole 88 for the fluid in pressure 56.

The described method for manufacturing the cellular structures 31 and 81 and the achieved plane and three-dimensional components with composites of two or more layers overcome the limits of the known methods and structures, as far as the cost and the complexity it concerns. Further, this method largely extends the possibilities of use of these structures, in particular in the field of the means of transportation.

The welding configurations of the three plates 32, 33 and 34 can be different by those of reticular shape of figure 1.

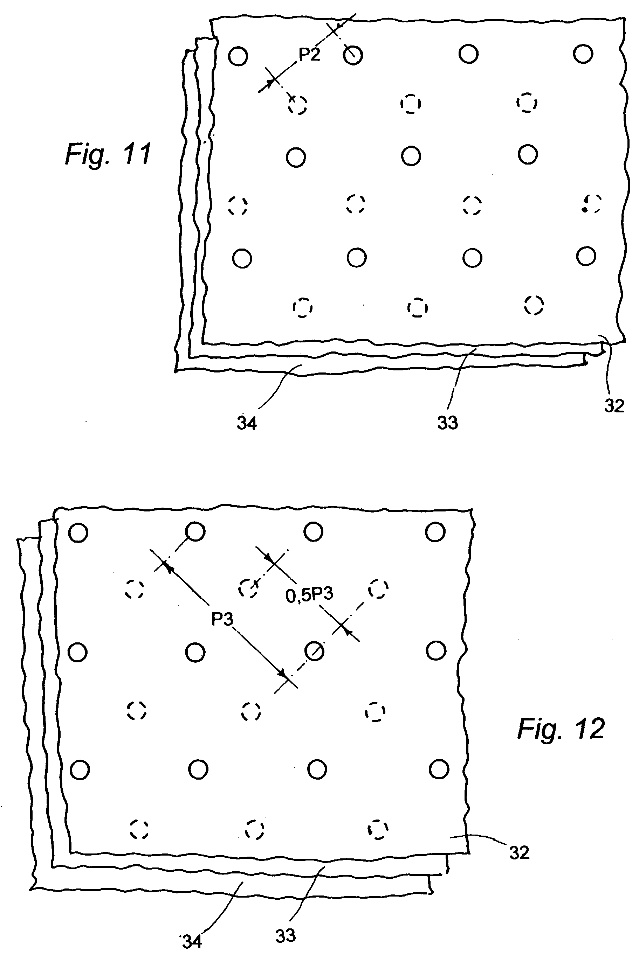

As an example, these configurations can assume those of "quinconce" type of pitch P2 between the staggered welding, as represented in figure 11, or the one of reticular type of pitch P3, in which the external upper plate 32 is staggered of 0,5 times P3 with respect to the external lower plate 34, as represented in figure 12, or, alternatively, other types of surface regular pitches not represented in the figures.

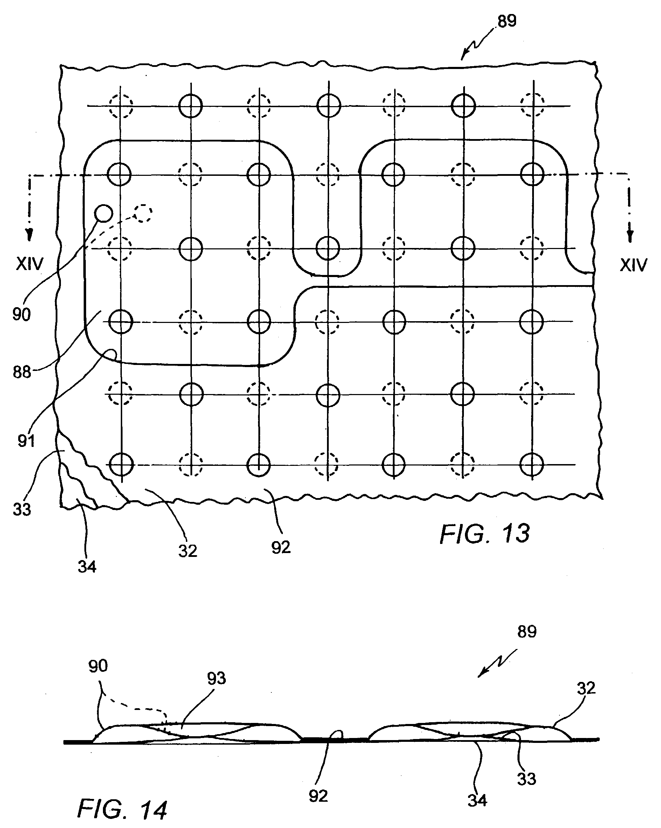

The described method of expansion for the whole surface of the plane sheet 35 or three-dimensional component 38 can be applied also to limited areas 88 of a plane or a three-dimensional cellular component 89 (Figs. 13 e 14).

The areas 88 are delimited by welding closed seams 91 for differentiating the rigidity of the structure area by area, in dependence on the design needs. In particular, the area of the component 89 represented with 92 will be not expanded, whilst it will be expanded the area 88 delimited by the seam 91.

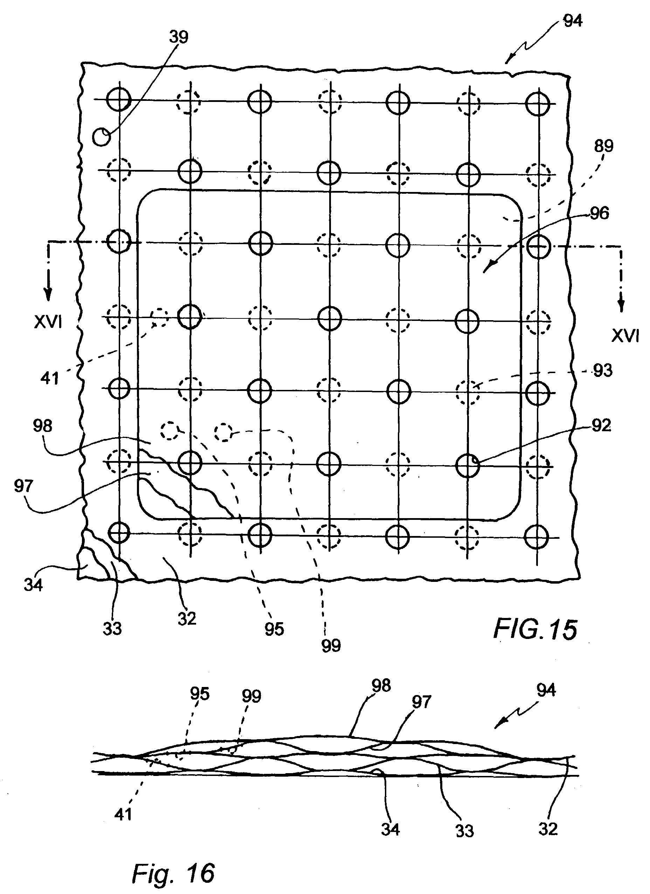

The figures 15 and 16 illustrate the capability of a method for differentiating the rigidities in a planar or three-dimensional cellular component 94 obtained in composite of metallic welded plates, by differentiating zone by zone the number of the plates constituting this component.

In particular, the cellular component 94 of the figures 15 and 16 is a plane composite of plates with expanded cells formed with three superposed plates 32, 33 and 34 which, in a central zone 96, is increased up to five plates by welding two further plates 97 and 98 above the plates 32, 33 and 34 and expanding them in accordance with the method of the invention.

The technique for differentiating the rigidity of the structure of figure 13 can be combined on a single cellular structure with the technique of figure 15. Additionally, or in alternative, the pitch of the welding zones can be modified for shape or amounts, area by area, according to specific requirements. Advantageously, the method of the invention can be applied to plates of diversified thickness, for example of the "taylor blank" type. If thought appropriate, the heights of expansion can be diversified based on the design needs.

Exemplary uses of the cellular structure of the invention in the motor-vehicle field are the construction of the floor of the vehicles and the fireguard wall separating the motor receptacle from the dwelling.

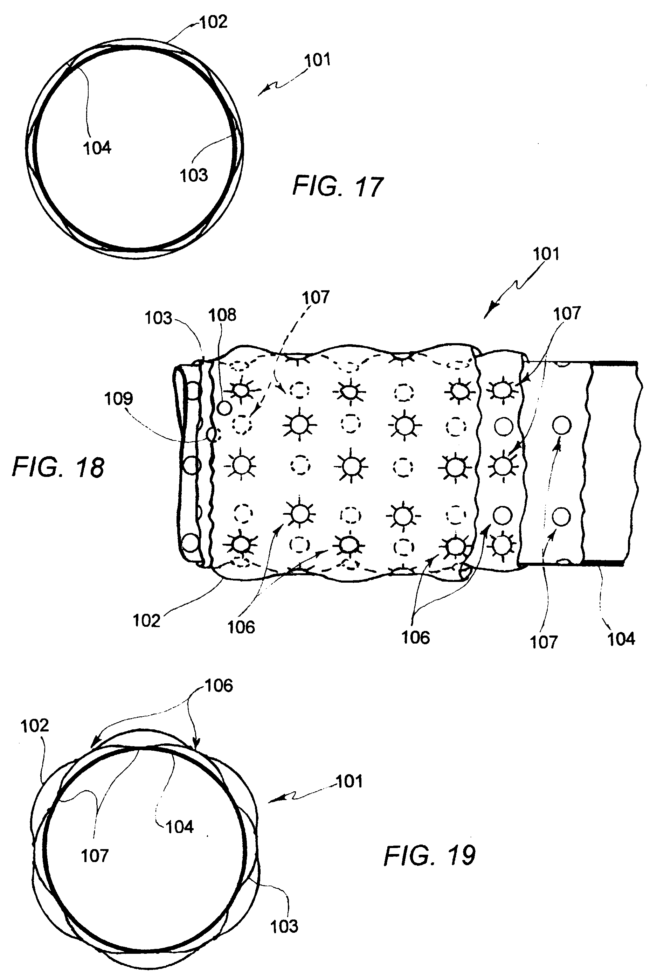

The cellular structure of the invention can be also used for products starting from laminar elements with curved surfaces, for instance of tubular shapes as represented in the figures 17 to 19. A cellular structure of this type, represented with 101, can be used for producing exhaust pipes for motor vehicles having relatively low costs and thermal and acoustical insulating properties.

The cellular structure 101 comprises three metallic superposed tubes, namely an external tube 102, an intermediate tube 103 and an internal tube 104, and differentiated welding zones 106 and 107 between the tubes disposed according to a superficial reticular configuration. The thicknesses of the external and the intermediate tubes are smaller of the thickness of the internal tube 104. The tubes 102 and 103 provide a respective admission hole 108 and 109.

The method for manufacturing the structure 101 of the invention comprises, in a first step, the fitting of the three tubes 102, 103 and 104 with minimum gaps and the welding thereof, two by two, in the zones 106 and 107. As for the structure 31, the welding between the tubes 103 and 104 occurs "by transparency" by laser beam with welding seams of closed shape. The method provides the forming of cells with a superficial staggered pitch between the external tube 102 and the intermediate tube 103 and between the intermediate tube 103 and the internal tube 104. The rules for the length L of the seams and the pitch P of the structure 101 can be identical to the ones of the structure 31.

If necessary, the welded tubes 102, 103 and 104 can be curved for being adapted to the desired configuration for the exhaust pipes of the motor vehicle.

The superposed and welded tubes 102, 103 and 104 are fitted in an expansion equipment, not shown in the figures, having the configuration of the curved structure and an expansion room of height H. A sleeve connected to a fluid compressor will be coupled with the admission hole 108 of the tube 102.

Then, a gas or liquid in pressure is admitted in the interstitial space between the tubes, through the sleeve and the admission holes 108 and 109, at ambient temperature and at an adequate pressure. The pressure of the gas or liquid will deflect the tubes 102 and 103 of smaller thickness, stretching the surfaces of the tubes 102 and 103 and deforming them as diaphragm deflection surfaces depending on the shape of the welding zones 106 and 107. On the contrary, the internal tube 104 will remain substantially un-deformed in dependence on its greater thickness.

The tubes 102 and 103 withdraw each other in the expansion room under a sufficient pressure of the gas or liquid within the limits of plastic deflection of the material. It occurs in the sections of minor resistance adjacent to the welding zones 106 and 107 and up to the distance H, in which the external tube 102 contacts the contrast surface of the expansion equipment.

Exemplary, the cellular structure 101 has a diameter of 60 mm. The tubes 102 and 103 have a thickness of 0,5 mm, whilst the internal tube 104 has a thickness of 1-1,5 mm. The pitch P is of 20-30 mm and the welding seams have a diameter of 5 mm.

For the structure 101 the contacts betwen the tubes 102, 103 and 104 can be improved and the risks of undue welding can be avoided by slightly embossing the tube 103 and/or the tube 102 in the zones 106 and 107.

Naturally, the principle of the disclosure remaining the same, the embodiments and the details of manufacturing can be widely varied with respect to that described and illustrated by way of non-limitative example, without by this, departing from the ambit of the present invention.

## Claims

1. A method for manufacturing cellular structures (31, 81, 101) in composite of metallic layers comprising at least two superposed layers (32, 33; 82, 83; 102, 103) and welding zones (36; 86; 106) between the said layers which are disposed according to a predetermined superficial configuration, the said method being characterized by the fact that it comprises the following steps:
a) delimiting the welding zones (36; 86; 106) so as to define cells (58) having a given pitch (P);
b) determining interstitial spaces (54) between the layers (32, 33; 82, 83; 102, 103) including the said welding zones (36; 86; 106);
c) entering a fluid in pressure (56) in the said interstitial spaces (54); and
d) enabling at least one of the two layers (32; 82; 102) to deform with respect to the other layer (33; 83; 103) in the cells (58) adjacent to the welding zones (36; 86; 102) up to a given thickness (H) of the structure (31, 81, 101).

2. Method according to Claim 1, characterized by the fact that said welding zones (36; 86; 106) between the layers (32, 33; 82, 83; 102, 103) are obtained by means of closed welding seams (59).

3. Method according to Claim 2, characterized by the fact that said seams are of circular form and in which the ratio between the pitch (P) of the welding zones (36; 86; 106) and the length (L) of a welding seam (59) is included between 3,2 and 0,6.

4. Method according to any of the preceding claims, characterized by the fact that said cells (58) are partially or entirely filled with damping and/or insulating material.

5. Method according to any of the preceding claims, characterized by the fact that said layers (32, 33, 34; 102, 103, 104) are in number of three and in which the welding zones (36) between the first layer (32; 102) and the second layer (33, 103) are staggered with respect to the welding zones (37) between the second layer (33, 103) and the third layer (34, 104).

6. Method according to Claim 5 characterized by the fact that the welding between the second layer (33, 103) and the third layer (34, 104) is obtained, by means of laser beams, by transparency through the first layer (32, 102).

7. Method according to any of the preceding claims, characterized by the fact that said cellular structure (31) is of plane shape, and in which the said layers are constituted by overposed plates (32, 33).

8. Method according to any of the Claims 1 to 6, characterized by the fact that said cellular structures (38) are of three-dimensional shape, and in which the step c) is preceded by three-dimensional forming a structure including the said layers (32, 33; 82, 83) superposed each other and welded zone to zone.

9. Method according to any of the preceding claims, characterized by the fact that the layers (32, 33; 62, 63) are inserted into an expansion equipment (42) which limits the deformation of the layers and defines the said given thickness (H) of the cellular structure.

10. Method according to any of the Claims 1 to 7, characterized by the fact that said cellular structures (101) are of tubular shape, and in which the said layers (102, 103) comprise tubes fined each other and welded zone to zone.

11. Method according to Claim 5 or 6 and Claim 10, characterized by the fact that the internal tube (104) has a thickness greater than the thicknesses of the intermediate and the external tubes (102, 103) and in which the overposed tubes (102, 103, 104) are inserted into an expansion equipment for limiting the deformation of the external tube and defining the said give thickness (H).

12. Method according to any of the preceding claims, characterized by the fact that the number of the layers in the composite is different by zone to zone in such a way to satisfy in optimised manner different design rigidities.

13. Cellular structure (31, 81, 101), comprising at least two metallic layers (32, 33; 82, 83; 102, 103) having welding zones (36; 86; 106) according to a given pitch (P), characterized by the fact that the said structure comprises zones deformed between the welding zones (36, 86; 106), disposed at a given distance between the two layers (32, 33; 82, 83; 102, 103) and defining cells (58) between the layers (32, 33; 82, 83; 102, 103) disposed according to the said given pitch (P).

14. Cellular structure, according to Claim 13, characterized by the fact that said layers (32, 33, 34; 102, 103, 104) are in number of three and said welding zones (36, 37; 106, 107) are obtained by laser beams and are staggered each other.

15. Cellular structure, according to Claim 13, or Claim 14, characterized by the fact that the welding zones are delimited by welding seams (59) with a length L and in which said cells (58) are configured in such a manner that the ratio between the pitch P and the length L is included between 3,2 and 0,6.

16. Cellular structure according to Claim 13, or Claim 14 or Claims 15, characterized by the fact that the said structure (101) is of tubular shape, and in which the said layers (102, 103, 104) comprise tubes fitted each other and welded zone to zone.

17. Cellular structure, according to any of the Claims 13 to 16, characterized in that it comprises given areas of different rigidity.
